# FASCICULE DE BREVET EUROPEEN

(11) **EP 1 740 803 B1**
(45) Date de publication et mention de la délivrance du brevet: **13.06.2012**
(21) Numéro de dépôt: 05762437.1
(22) Date de dépôt: 26.04.2005
(51) Int. Cl.: F02B 29/04, F02M 31/04, F02M 25/07

(54) **SYSTEME AMELIORE DE REGULATION DE LA TEMPERATURE DES GAZ ADMIS DANS UN MOTEUR**
VERBESSERTES SYSTEM ZUM REGELN DER TEMPERATUR VON EINLASSGAS IN EINEM MOTOR
IMPROVED SYSTEM FOR REGULATING THE TEMPERATURE OF INTAKE GAS IN AN ENGINE

(30) Priorité: 30.04.2004 FR 0404659
(43) Date de publication de la demande: 10.01.2007
(73) Titulaire: VALEO SYSTEMES THERMIQUES, 78321 Le Mesnil St Denis Cedex (FR)
(72) Inventeur: CHANFREAU, Mathieu, F-78650 Saulx Marchais (FR)
(86) Numéro de dépôt international: PCT/FR2005/001029
(87) Numéro de publication internationale: WO 2005/116414

(56) Documents cités:
- EP-A- 1 273 786
- EP-A- 1 273 787
- EP-A- 1 273 788

## Description

L'invention se rapporte aux échangeurs de chaleur pour refroidir ou réchauffer les gaz admis dans les chambres de combustion d'un moteur thermique de véhicule automobile.

Elle concerne plus particulièrement un procédé et un système de régulation de la température des gaz admis dans un moteur thermique de véhicule automobile.

Les systèmes d'échange de chaleur classiques, pour la régulation thermique des gaz admis dans un moteur de véhicule automobile, comportent un module d'échange de chaleur destiné à réguler la température des gaz qui alimentent le moteur. Un exemple d'un tel système est montré dans le document EP-1273787. Les moteurs thermiques turbo-compressés, en particulier les moteurs diesel, sont alimentés par un air sous pression appelé "air de suralimentation", provenant d'un turbo compresseur actionné par les gaz d'échappement du moteur. Par suite de sa compression, cet air se trouve à une température trop élevée et il est souhaitable, pour un bon fonctionnement du moteur, de le refroidir avant son admission dans ce dernier. On utilise pour cela, de manière classique, un refroidisseur appelé refroidisseur d'air de suralimentation (en abrégé "RAS"). Ce refroidisseur a pour fonction de refroidir l'air de suralimentation par échange thermique avec un autre fluide comme l'air extérieur ou un liquide comme l'eau d'un circuit d'eau à basse température (entre 20°C et 40°C environ) et forme ainsi un échangeur du type air/air ou liquide/air.

Les moteurs thermiques turbo-compressés, notamment les moteurs diesel, sont de plus en plus alimentés par des gaz d'échappement recirculés (en abrégé EGR). En effet, pour obtenir un meilleur rendement du moteur et diminuer la pollution, il est connu de recirculer une partie des gaz d'échappement vers l'admission du moteur. Les gaz d'échappement recirculés sont à une température très élevée (500 à 600°C environ). C'est pourquoi, ils sont classiquement refroidis au moyen d'un autre échangeur alimenté par l'eau de refroidissement du moteur, appelé refroidisseur de gaz d'échappement recirculés (en abrégé "EGRC").
Enfin, il est connu de réchauffer l'air d'alimentation du moteur lorsque sa température est trop basse, en particulier en phase de démarrage du véhicule et par température extérieure très basse et/ou en cas de régénération d'un système de post-traitement des émissions (par exemple un filtre à particules). Ce réchauffage s'effectue dans un échangeur de chaleur appelé réchauffeur d'air d'alimentation (en abrégé "RAA"). L'air d'alimentation est réchauffé le plus souvent par échange de chaleur avec l'eau du circuit de refroidissement du moteur dit circuit à haute température.

Dans des réalisations existantes, le refroidisseur d'air de suralimentation RAS peut être dérivé ponctuellement pour assurer la montée en température du moteur en phase de démarrage à froid. Le réchauffeur d'air d'alimentation RAA peut être monté sur cette dérivation. Il existe également des architectures dans lesquelles le refroidisseur des gaz d'échappement EGRC est dérivé pour réduire la pollution en phase de démarrage à froid.

EP 1 273 787 et EP 1 273788 proposent un système d'alimentation en gaz d'un moteur diesel ayant une architecture simplifiée, dans laquelle le module d'échange de chaleur ne comporte que deux branches. Une des branches comporte un refroidisseur d'air de suralimentation RAS et l'autre branche comporte un échangeur de chaleur EGRC/RAA qui peut fonctionner en tant que refroidisseur des gaz d'échappement EGRC ou en tant que réchauffeur d'air d'alimentation RAA. Des vannes permettent de répartir les gaz dans les différentes branches du circuit.

Toutefois, les architecture EP 1 273 787 et EP 1 273 788 ne permettent pas d'adapter la température des gaz admis dans le moteur à toutes les phases de fonctionnement de ce dernier.

En particulier, dans EP 1 273 787, au cours de la phase de démarrage du moteur froid, les gaz d'échappement recirculés qui sont chaud et l'air d'alimentation qui est froid arrivent dans l'échangeur de chaleur EGRC/RAA. Le mélange est alors refroidi, alors que dans une telle phase il est souhaitable d'alimenter le moteur en gaz non refroidis.

EP 1 273 788 ne présente pas de tels inconvénients, car le moteur est alimenté en phase froide directement avec un mélange d'air d'alimentation froid et de gaz d'échappement recirculés chaud, sans refroidissement. Cependant, dans la phase chaude du cycle du moteur, les gaz d'échappement recirculés sont refroidis dans l'échangeur de chaleur EGRC/RAA puis dans le refroidisseur d'air de suralimentation RAS avant d'être filtrés par le filtre à particules. Les gaz d'échappement recirculés risquent donc d'encrasser le refroidisseur d'air de suralimentation RAS.

L'invention a pour but de surmonter les inconvénients précités en proposant un système d'échange de chaleur pour la régulation thermique des gaz admis dans un moteur de véhicule automobile, comportant deux branches d'échange de chaleur. La première branche comporte un premier échangeur conformé pour fonctionner en mode refroidisseur, et des premiers moyens de répartition, reliés en entrée à une arrivée d'air d'admission et en sortie au premier échangeur. La deuxième branche comporte un deuxième échangeur de chaleur conformé pour fonctionner en mode refroidisseur et.des deuxièmes moyens de répartition, reliés en entrée à l'arrivée de gaz d'échappement recirculés et en sortie au deuxième échangeur. Les premiers moyens de répartition sont aptes à ajuster la proportion d'air d'admission à refroidir dans le premier échangeur et les deuxièmes moyens de répartition sont aptes à ajuster la proportion de gaz d'échappement recirculés à refroidir dans le deuxième échangeur. Avantageusement, le deuxième échangeur est en outre conformé pour fonctionner en mode réchauffeur et les deuxièmes moyens de répartition sont en outre reliés à l'arrivée d'air d'admission par un conduit intermédiaire, les deuxièmes moyens de répartition étant aptes à ajuster la proportion d'air d'admission à réchauffer dans le deuxième échangeur.

Des caractéristiques optionnelles du système d'échange de chaleur selon l'invention, complémentaires ou de substitution, sont énoncées ci-après:
- Les premiers moyens de répartition sont en outre reliés en sortie aux deuxièmes moyens de répartition par le conduit intermédiaire, les premiers moyens de répartition étant aptes à ajuster la proportion d'air d'admission à répartir dans le conduit intermédiaire.
- Le système d'échange de chaleur comporte des moyens de commande propres à commander l'un au moins des moyens de répartition parmi les premiers et les deuxièmes moyens de répartition.
- Le premier échangeur est relié à une entrée de fluide froid propre à délivrer un fluide froid pour l'échange de chaleur avec l'air d'admission qui traverse le premier échangeur.
- Le deuxième échangeur est raccordé à une entrée de fluide régulé propre à délivrer un fluide dont la température est régulée pour l'échange de chaleur avec les gaz qui traversent le deuxième échangeur.
- L'entrée de fluide régulé du deuxième échangeur est reliée à une arrivée de fluide chaud et à une arrivée de fluide froid, tandis que le système comprend en outre des moyens de répartition auxiliaires commandés par les moyens de commande, les moyens de commande étant propres à ajuster la proportion de fluide chaud et la proportion de fluide froid à envoyer dans l'entrée de fluide du deuxième échangeur.
- La température du fluide délivré par l'arrivée de fluide chaud est sensiblement comprise entre 85°C et 118°C.
- Les moyens de répartition auxiliaires sont directement raccordés à l'arrivée de fluide chaud, à l'arrivée de fluide froid et à l'entrée de fluide du deuxième échangeur.
- Les moyens de répartition auxiliaires comprennent un capteur de température.
- Les moyens de répartition auxiliaires sont agencés pour délivrer un fluide chaud dans l'entrée de fluide du deuxième échangeur, lorsque le deuxième échangeur n'est pas traversé par des gaz, dans la phase de montée en température du moteur.
- La température du fluide chaud dans l'entrée de fluide du premier échangeur est au moins égale à 60°C.
- Les premiers moyens de répartition sont reliés en sortie à une première dérivation de contournement du premier échangeur, les premiers moyens de répartition étant aptes à ajuster la proportion d'air d'admission à répartir dans la première dérivation, ce qui permet d'ajuster la proportion d'air d'admission à ne pas refroidir ni réchauffer, tandis que les deuxièmes moyens de répartition sont reliés en sortie à une deuxième dérivation de contournement du deuxième échangeur, les deuxièmes moyens de répartition étant aptes à ajuster la proportion de gaz d'échappement recirculés à répartir dans la deuxième dérivation, ce qui permet d'ajuster la proportion de gaz d'échappement recirculés à ne pas refroidir.

- Les deuxièmes moyens de répartition sont en outre reliés en sortie à une dérivation commune de contournement du premier échangeur et du deuxième échangeur, les premiers moyens de répartition étant aptes à collaborer avec les deuxièmes moyens de répartition pour ajuster la proportion d'air d'admission à répartir dans la dérivation commune, ce qui permet d'ajuster la proportion d'air d'admission à ne pas refroidir ni réchauffer, et les deuxièmes moyens de répartition étant aptes à ajuster la proportion de gaz d'échappement recirculés à répartir dans la dérivation commune, ce qui permet d'ajuster la proportion de gaz d'échappement recirculés à ne pas refroidir.
- Le premier échangeur et le deuxième échangeur comportent un collecteur de sortie commun.
- Les dérivations débouchent dans le collecteur commun.
- Les premiers moyens de répartition et les deuxièmes moyens de répartition comprennent une vanne proportionnelle respective.
- Le système d'échange de chaleur comporte une vanne de débit agencée sur l'arrivée de gaz d'échappement recirculés, en amont des deuxièmes moyens de répartition, pour régler le débit des gaz recirculés.
- Le deuxième échangeur de chaleur est réalisé en aluminium.

D'autres caractéristiques et avantages de l'invention apparaîtront à l'examen de la description détaillée ci-après, et des dessins annexés sur lesquels:
- la figure 1A est un schéma représentant un premier mode de réalisation d'un système d'échange de chaleur conforme à l'invention;
- la figure 1B est un schéma représentant un deuxième mode de réalisation d'un système d'échange de chaleur conforme à l'invention;
- la figure 2 est une représentation d'un système d'échange de chaleur conforme à l'invention;
- la figure 3 est une variante de réalisation du système d'échange de chaleur conforme à l'invention; et
- les figures 4 à 7 sont des organigrammes illustrant le fonctionnement du système de régulation dans différentes phases de fonctionnement du moteur.

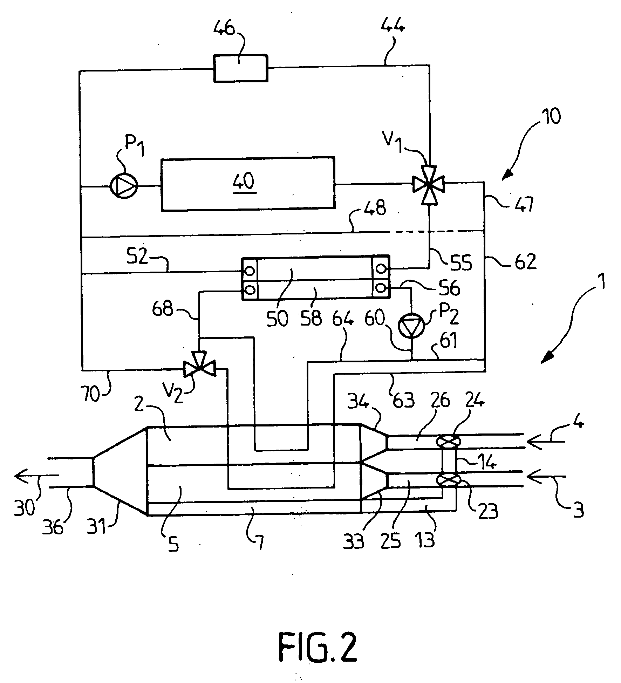

On se réfère à la figure 2, qui représente un système d'échange de chaleur conforme à l'invention. Le système d'échange de chaleur conforme à l'invention est constitué par un module d'échange de chaleur désigné par la référence générale 1.

Le module d'échange de chaleur 1 comprend un premier échangeur de chaleur 2. Cet échangeur est destiné à l'air d'alimentation (également appelé "air d'admission"). Comme schématisé par la flèche 4, l'air d'admission parvient par l'intermédiaire d'un premier conduit 26 jusqu'au collecteur d'entrée 34 de l'échangeur 2. Le premier échangeur 2 est en outre parcouru par un fluide, notamment de l'eau, pour l'échange de chaleur avec les gaz qui le traversent.

Des premiers moyens de répartition 24, constitués dans l'exemple par une vanne de répartition, permettent de répartir l'air d'alimentation entre le premier conduit 26 et un conduit intermédiaire 14.

D'autre part, le module d'échange de chaleur 1 comporte un deuxième échangeur désigné par la référence 5, propre à recevoir des gaz d'échappement recirculés ou un mélange de gaz d'échappement recirculés et d'air. Comme schématisé par la flèche 3, les gaz d'échappement recirculés arrivent par l'intermédiaire d'un deuxième conduit 25 jusqu'au collecteur d'admission 33, également appelé collecteur d'entrée ou boite d'entrée, de l'échangeur 5. Le deuxième échangeur 5 est en outre parcouru par un fluide, notamment de l'eau, pour l'échange de chaleur avec les gaz qui le traversent.

Des deuxièmes moyens de répartition 23 sont reliés à l'arrivée de gaz d'échappement 3 et au deuxième conduit 25. Les deuxièmes moyens de répartition 23 sont en outre reliés au conduit intermédiaire 14 et à une dérivation commune 7. Ils permettent de diriger l'air d'alimentation provenant du conduit 14 ou les gaz d'échappement recirculés provenant de l'arrivée 3 ou encore un mélange d'air et de gaz d'échappement recirculés vers l'échangeur 5 et/ou encore vers la dérivation commune 7.

Les moyens de répartition 23 peuvent être par exemple constitués d'une vanne de répartition.

Les vannes 24 et 23 sont de préférence des vannes proportionnelles, par exemple de type papillon ou à organe rotatif ou encore à soupapes.

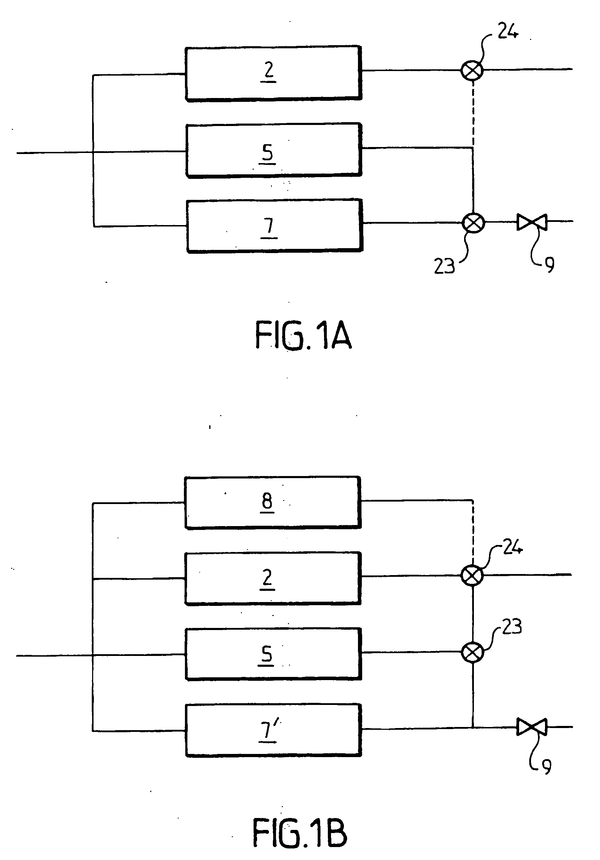

On remarque que dans l'exemple représenté sur la figure 2, il existe une dérivation 7 commune à l'air d'admission et aux gaz d'échappement recirculés. Cette forme de réalisation est représentée schématiquement sur la figure 1A. Toutefois, en variante, on pourrait prévoir une première dérivation 8 pour l'air d'admission et une deuxième dérivation distincte 7' pour les gaz d'échappement recirculés, comme représenté sur la figure 1B.

Dans la suite de la description, il sera fait référence à une dérivation commune 7, à titre d'exemple non limitatif.

Le module d'échange de chaleur 1 comporte un collecteur de sortie 31, également appelé boite de sortie. Dans l'exemple représenté, le collecteur de sortie 31 est commun à l'échangeur 2 et à l'échangeur 5. Toutefois, en variante de réalisation, chaque échangeur pourrait posséder son propre collecteur de sortie. L'air d'admission qui a circulé dans l'échangeur 2 ainsi que les gaz d'échappement recirculés ou le mélange d'air d'admission et de gaz d'échappement recirculés qui ont circulé dans l'échangeur 5 se mélangent dans le collecteur de sortie 31 avant d'être dirigés par une ou plusieurs canalisations 36 vers l'admission du moteur comme schématisé par la flèche 30.

Le module d'échange de chaleur 1 qui vient d'être décrit est raccordé au circuit de refroidissement 10 du moteur 40 du véhicule automobile. Ce circuit de refroidissement comprend une pompe principale P1, généralement mécanique, qui fait circuler l'eau du circuit de refroidissement à travers le moteur 40. Après avoir traversé le moteur, l'eau peut être répartie-par des troisièmes moyens de répartition V1, qui peuvent être constitués par exemple par une vanne à quatre voies ou par un thermostat plus simple.

La vanne V1 peut transmettre une partie ou la totalité de l'eau qui sort du moteur vers une dérivation 44, sur laquelle est monté un radiateur de chauffage 46, également appelé aérotherme, qui permet de chauffer l'habitacle du véhicule automobile. La vanne V1 peut également être positionnée pour empêcher la transmission de l'eau qui sort du moteur vers la canalisation 44.

La vanne V1 peut transmettre une partie ou la totalité de l'eau qui sort du moteur à une canalisation 47, qui peut faire passer l'eau dans une canalisation de dérivation 48 qui ramène l'eau jusqu'à la pompe de circulation P1 sans refroidissement. La vanne V1 peut également être positionnée pour empêcher la transmission de l'eau qui sort du moteur vers la canalisation 47.

Par ailleurs, la vanne V1 peut transmettre une partie ou la totalité de l'eau qui sort du moteur vers une canalisation 55, qui permet d'amener l'eau vers un refroidisseur à haute température 50 ou refroidisseur HT. A sa sortie du refroidisseur 50, l'eau refroidie est ramenée vers la pompe de circulation P1 par la canalisation 52. La vanne V1 peut également être positionnée pour empêcher la transmission de l'eau qui sort du moteur vers la canalisation 55.

La vanne V1 permet ainsi de répartir l'eau entre la canalisation de dérivation 47, le radiateur 46 et le refroidisseur à haute température 50, en fonction de la température de l'eau à la sortie du moteur 40, des besoins du moteur et du chauffage de l'habitacle.

La canalisation 47, peut aussi faire passer l'eau dans une canalisation de dérivation 62 qui véhicule l'eau chaude qui quitte le moteur 40 vers le module d'échange de chaleur 1. L'eau qui circule dans la canalisation 62 est sensiblement à la même température que l'eau qui sort du moteur, c'est à dire une température sensiblement comprise entre 85°C et 118°C en fonction des phases de fonctionnement du véhicule, et en particulier lorsque le moteur est chaud.

Le premier échangeur 2 est raccordé à une entrée d'eau froide 64 propre à délivrer de l'eau froide pour l'échange de chaleur avec l'air qui traverse le premier échangeur 2.

Le deuxième échangeur 5 est raccordé à une entrée d'eau 63 propre à délivrer de l'eau ayant une température régulée pour l'échange de chaleur avec les gaz qui traversent le deuxième échangeur 5. L'entrée de fluide régulé 63 est reliée à la canalisation 62 qui correspond à une arrivée d'eau chaude et à la canalisation 61 qui correspond à une arrivée d'eau froide.

Des moyens de répartition auxiliaires V2 sont prévus pour ajuster la proportion d'eau chaude et la proportion d'eau froide à envoyer dans l'entrée d'eau 63 du deuxième échangeur 5.

En particulier, lorsque le deuxième échangeur 5 est en mode "réchauffeur d'air d'alimentation", l'eau chaude quitte le moteur 40 par la canalisation 62. L'eau de la canalisation 62 se déverse dans la canalisation 63 pour parvenir jusqu'à l'échangeur 5 qui joue ainsi le rôle de réchauffeur d'air d'admission. Après avoir circulé dans l'échangeur 5, l'eau à haute température parvient jusqu'aux moyens de répartition auxiliaires V2.

Ces moyens de répartition auxiliaires peuvent être constitués par une vanne à trois voies V2. La vanne V2 peut être située à l'intersection des branches 63, 68 et 70, comme représenté sur la figure 2. En ce cas, elle permet de ramener l'eau, par l'intermédiaire de la conduite 70, jusqu'à la pompe principale de circulation P1.

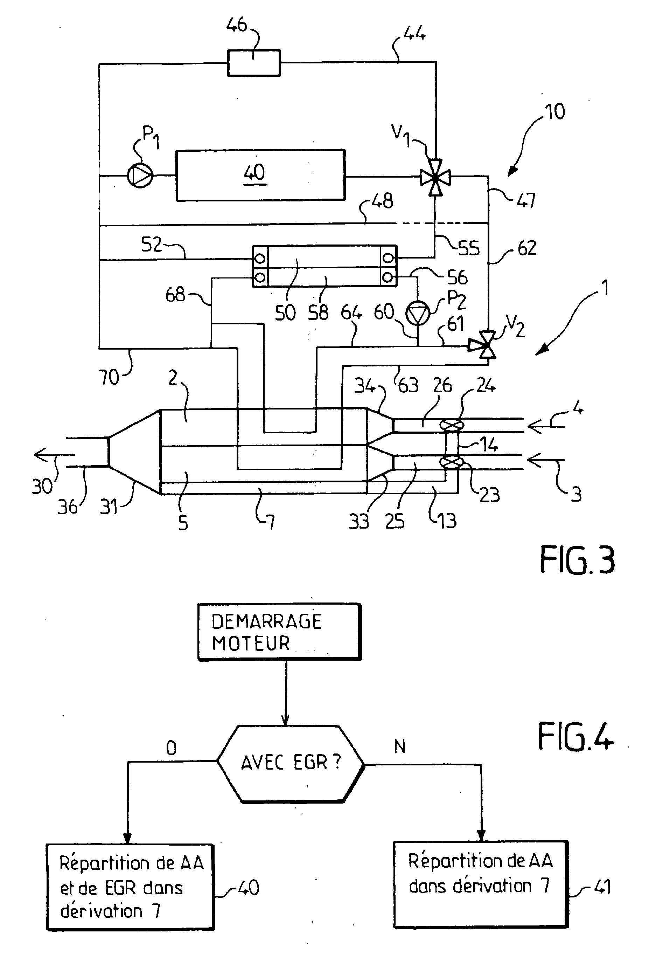

En variante, comme représenté sur la figure 3, elle peut être située à l'intersection des branches 61, 62 et 63. La suite de la description sera faite en référence à la position de la figure 2, pour la vanne V2, à titre d'exemple non limitatif.

En complément, un capteur de température peut être intégré dans la vanne V2 pour réguler le niveau de température du circuit à basse température.

Le circuit de refroidissement doit comprendre une pompe additionnelle P2, généralement électrique.

Le refroidisseur d'air de suralimentation RAS n'est pas alimenté en air 4 dans les phases de réchauffage en mode RAA.

Dans les phases de suralimentation du moteur, la pompe additionnelle P2 fait circuler de l'eau dans la canalisation 60, cette eau passant ensuite partiellement dans la canalisation 64. L'eau traverse le refroidisseur d'air de suralimentation (RAS) 2 avant de revenir par la canalisation 68 jusqu'au refroidisseur à basse température 58. L'eau peut y être refroidie à une température plus basse que dans le refroidisseur à haute température 50. En particulier, l'eau froide qui sort du refroidisseur à basse température 58 est sensiblement comprise entre 25°C et 50°C, lorsque la température ambiante est de l'ordre de 20°C. L'eau à basse température sort du refroidisseur 58 et repasse dans la canalisation 60. L'échangeur 2 est ainsi alimenté en eau à basse température.

La canalisation 60 fait également circuler une partie de l'eau à basse température reêue dans la canalisation 61. Cette eau peut se mélanger à l'eau chaude qui circule dans la canalisation 62 vers la canalisation 63, grâce à la vanne V2. Elle traverse ensuite l'échangeur 5, avant d'arriver à la vanne V2.

L'échangeur 5 peut ainsi être alimenté soit en eau à basse température ou soit par un mélange d'eau à basse température et d'eau chaude, soit en eau chaude à haute température.

L'échangeur 2 fonctionne toujours comme refroidisseur d'air de suralimentation RAS et est alimenté par de l'eau froide ayant circulé dans le refroidisseur à basse température 50.

L'échangeur 5 peut fonctionner selon deux modes, en fonction des besoins du moteur.

Dans un premier mode, il est utilisé pour refroidir les gaz d'échappement recirculés 3. L'échangeur 5 est alors utilisé comme refroidisseur de gaz d'échappement recirculés EGRC. Dans ce cas, l'échangeur 5 est alimenté en eau froide issue de la canalisation 61 (refroidie par l'échangeur à basse température 58), ou par un mélange d'eau chaude issue de la canalisation 62 et d'eau froide issue de la canalisation 61, ou encore en eau chaude ou tiède issue de la canalisation 62 uniquement.

Dans un second mode de fonctionnement, l'échangeur 5 est utilisé pour réchauffer l'air d'alimentation du moteur. Dans ce cas, il fonctionne comme réchauffeur RAA et non comme refroidisseur. Il est alors alimenté en eau chaude sortant directement du moteur 40 par la canalisation 62, sans avoir été refroidie.

Les gaz qui sortent de l'échangeur 2, de l'échangeur 5 ou de la dérivation 7 passent dans le collecteur commun 31 où ils se mélangent puis transitent ensemble par le conduit 30. Ainsi l'air et les gaz d'échappement recirculés sont bien mélangés et mieux répartis dans chaque cylindre.

En outre, le système d'échange de chaleur représenté sur les figures 1A et 1B peut comporter des moyens 9, en amont de la vanne 23, pour régler le débit des gaz d'échappement recirculés. Une fraction des gaz d'échappement peut être rejetée directement à l'atmosphère, tandis que l'autre partie est recirculée. Par exemple, ces moyens 9 peuvent être constitués d'une vanne de débit 9 propre à régler le débit à une valeur voulue.

Des moyens de commande, qui peuvent être par exemple une unité de commande électronique, sont propres à commander l'un au moins des moyens de répartition parmi les premiers moyens de répartition 24 et les deuxièmes moyens de répartition 23. Les moyens de commande peuvent en outre commander la vanne de débit 9, ainsi que la vanne V1 et la vanne V2. Cette commande est faite de manière à obtenir une température optimale du mélange d'air d'admission et de gaz recirculés parvenant dans le moteur, en particulier une température qui permette d'obtenir de bonnes performances du moteur et une pollution réduite. Cette commande est effectuée selon des paramètres et une loi de variation, qui peuvent être intégrés dans une mémoire et une logique de calcul faisant partie de l'unité de commande.

On se réfère maintenant aux organigrammes des figures 4 à 7, illustrant le fonctionnement du système de régulation dans phases de fonctionnement du moteur.

La figure 4 est un organigramme illustrant le fonctionnement du système de régulation en phase de démarrage du moteur 40.

Au démarrage du moteur, avec injection de gaz d'échappement recirculés, par exemple jusqu'à l'allumage du catalyseur, l'air d'admission doit être réchauffé au maximum tandis que les gaz d'échappement recirculés ne doivent pas être refroidis. Alors, comme illustré par l'étape 40 :
- L'air d'admission provenant de la canalisation 4 passe entièrement dans le conduit intermédiaire 14.
- Les gaz d'échappement recirculés provenant de la canalisation 3 se mélangent à l'air qui provient du conduit intermédiaire 14, puis le mélange est dirigé dans la dérivation commune 7.
- La vanne 24 est positionnée de manière à diriger l'air vers le conduit intermédiaire 14 et à empêcher qu'il ne passe dans l'échangeur 2.
- La vanne 23 est positionnée de manière à diriger le mélange d'air et de gaz d'échappement recirculés vers la dérivation 7.
- La vanne V1 est soit fermée en direction des branches 44, 47 et 55 car il n'y a pas de débit d'eau dans le moteur, soit agencée pour laisser un débit uniquement dans la dérivation du moteur 48.
- La position de la vanne V2 est indifférente.
- La pompe P2 n'est pas alimentée.

Au démarrage du moteur, en l'absence d'injection de gaz d'échappement recirculés, par exemple jusqu'à l'allumage du catalyseur. L'air d'admission ne doit pas être refroidi. Alors, comme illustré par l'étape 41 :
- L'air d'admission provenant de la canalisation 4 passe entièrement dans le conduit intermédiaire 14, puis dans le conduit 13, et enfin dans la dérivation commune 7.
- La vanne 24 est positionnée comme précédemment.
- La vanne 23 est fermée vers l'échangeur 5 et ouverte vers la dérivation 7 pour éviter un phénomène de corrosion qui pourrait se produire suite à un dépôt de condensats de gaz d'échappement recirculés dans l'échangeur 5.
- Les vannes V1 et V2 sont positionnées comme précédemment.

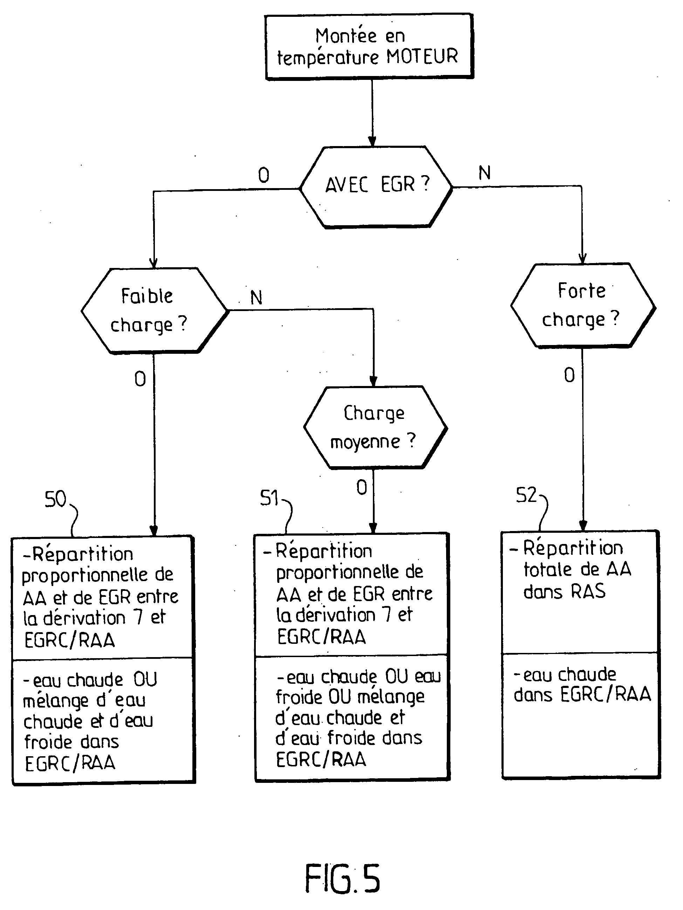

La figure 5 est un organigramme illustrant le fonctionnement du système de régulation en phase de montée en température du moteur.

Lors de la montée en température du moteur, avec injection de gaz d'échappement recirculés, par exemple après l'allumage du catalyseur, et à faible charge thermique, l'eau qui sort du moteur peut passer dans les branches 44, 47 et 55. L'air d'admission ne doit pas être refroidi ou doit être réchauffé, tandis que les gaz d'échappement recirculés doivent être refroidis légèrement ou ne doivent pas être refroidis du tout. Alors, comme illustré par l'étape 50 :
- L'air d'admission provenant de la canalisation 4 passe entièrement dans le conduit intermédiaire 14.
- Les gaz d'échappement recirculés provenant de la canalisation 3 se mélangent à l'air qui arrive du conduit. Le mélange peut être réparti proportionnellement entre l'échangeur 5 et la dérivation, 7. Le mélange peut également être envoyé entièrement dans la dérivation 7.
- La vanne V2 peut envoyer un mélange d'eau chaude et d'eau froide dans l'échangeur 5 (fonction de mitigeur) pour réguler la température d'admission des gaz arrivant dans le moteur. Elle peut également n'envoyer que de l'eau chaude dans l'échangeur 5 pour réchauffer le mélange d'air d'admission et de gaz qui y transite, si la température de l'eau est supérieure à la température du mélange. En particulier, la température de l'eau peut être au moins égale à 60°C pour éviter un phénomène de condensation et de corrosion dans l'échangeur 5.

- La pompe P2 n'est pas alimentée.
- La vanne 23 peut être positionnée pour diriger le mélange de gaz d'échappement et d'air dans l'échangeur 5 et empêcher qu'il ne passe dans la dérivation 7. Elle peut également être positionnée pour diriger le mélange de gaz d'échappement et d'air dans la dérivation 7 et empêcher qu'il ne passe dans l'échangeur 5. Elle peut encore être positionnée pour diriger une partie du mélange de gaz d'échappement et d'air dans la dérivation 7 et l'autre partie dans l'échangeur 5.
- La vanne 24 est positionnée pour.diriger l'air provenant de la canalisation 4 dans le conduit intermédiaire 14 et empêcher qu'il ne passe dans l'échangeur 2. Elle peut être entièrement ouverte ou partiellement ouverte pour augmenter le taux de gaz d'échappement recirculés.
- La vanne V2 est positionnée pour répartir l'eau qui provient de la branche 63 entre le refroidisseur à basse température 58 et la branche 70 en direction du moteur, ce qui permet d'avoir un mélange d'eau chaude (branche 62) et d'eau refroidie dans le refroidisseur 58 dans la branche 63 qui alimente l'échangeur 5. La vanne V2 peut également être positionnée pour diriger l'eau qui provient de la branche 63 uniquement dans la branche 70 en direction du moteur, ce qui permet de n'avoir que de l'eau chaude (branche 62) dans l'échangeur 5.
- La vanne V1 est positionnée pour empêcher que l'eau qui sort du moteur ne se dirige dans la branche 55 en direction du refroidisseur à haute température 50.

Lors de la montée en température du moteur, avec injection de gaz d'échappement recirculés, par exemple après l'allumage du catalyseur, mais cette fois à charge thermique moyenne, l'air d'admission ne doit pas être refroidi ou doit être réchauffé en partie, tandis que les gaz d'échappement recirculés doivent être refroidis partiellement ou ne doivent pas être refroidis du tout. Alors, le fonctionnement du système de régulation, comme illustré par l'étape 51, est sensiblement analogue à l'étape 50, mais la vanne V2 peut en outre n'envoyer que de l'eau froide dans l'échangeur 5 si la température de l'air en sortie du turbocompresseur dépasse un certain seuil.

Dans ce cas, la vanne V2 est positionnée pour diriger l'eau qui provient de la branche 56 uniquement dans le refroidisseur à basse température 58, ce qui permet de n'envoyer que de l'eau refroidie dans la branche 61 et dans l'échangeur 5 (branche 63).

Lors de la montée en température du moteur, cette fois sans injection de gaz d'échappement recirculés, par exemple après l'allumage du catalyseur, et à forte charge thermique, l'air d'admission doit être refroidi complètement ou partiellement. Alors, comme illustré par l'étape 52 :
- L'air d'admission provenant de la canalisation 4 passe entièrement ou partiellement dans l'échangeur 2 pour y être refroidi.
- La pompe P2 est alimentée pour envoyer de l'eau froide dans l'échangeur 2 (branche 64).
- La vanne V2 est positionnée comme dans l'étape 50, ce qui permet de n'avoir que de l'eau chaude (branche 63) dans l'échangeur 5, ce qui permet d'éviter un phénomène de condensation, et de l'eau froide dans l'échangeur 2 (branche 64).

- La vanne V1 est positionnée pour empêcher que l'eau qui sort du moteur ne se dirige dans la branche 55 en direction du refroidisseur à haute température 50.
- La vanne 24 est positionnée pour envoyer l'air qui provient de la canalisation 4 dans l'échangeur 2 ou partiellement dans le conduit intermédiaire 14 en direction de la dérivation 7.
- La vanne 23 est fermée en direction de l'échangeur 5 et ouverte en direction de la dérivation 7 pour éviter que des condensats de gaz d'échappement ne se forment dans l'échangeur 5, si la vanne de débit 9 est fuyante. Cette position de la vanne 23 permet d'éviter des phénomènes de corrosion.

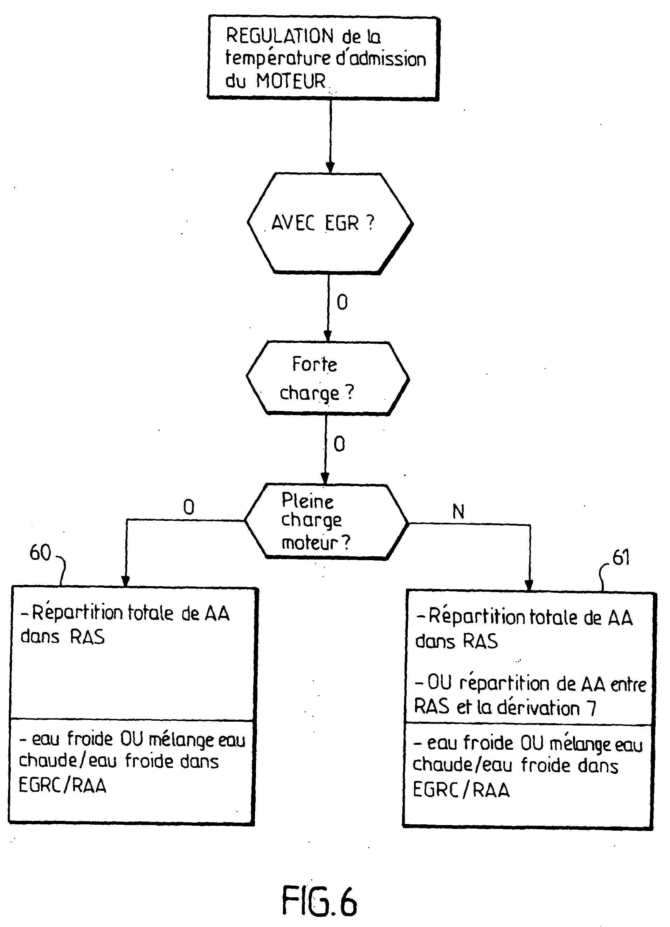

La figure 6 est un organigramme illustrant le fonctionnement du système de régulation en phase de régulation de température du moteur.

En phase de régulation de température du moteur, sans injection de gaz d'échappement recirculés, par exemple après l'allumage du catalyseur, et à forte charge thermique, l'air d'admission doit être refroidi complètement ou partiellement. Alors, comme illustré par l'étape 60 :
- L'air d'admission provenant de la canalisation 4 passe entièrement dans l'échangeur 2 pour y être refroidi.
- La pompe P2 est alimentée pour envoyer de l'eau froide dans l'échangeur 2.
- La vanne V2 peut être positionnée pour envoyer l'eau qui provient de la branche 63 uniquement vers le refroidisseur à basse température 58, ce qui permet d'envoyer un mélange d'eau chaude et d'eau froide dans l'échangeur 5. Elle peut être également positionnée de manière à envoyer l'eau qui provient de la branche 63 uniquement dans la canalisation 70, en direction du moteur, ce qui permet d'envoyer de l'eau chaude dans l'échangeur 5. L'échangeur 5 est ainsi prêt à refroidir des gaz d'échappement recirculés, en cas de passage à un mode de fonctionnement avec injection de gaz d'échappement recirculés. La température de l'eau peut être au moins égale à 60°C pour éviter un phénomène de condensation et de corrosion dans l'échangeur 5.

- La vanne V1 peut être positionnée pour empêcher que l'eau qui sort du moteur ne se dirige dans la branche 55 en direction du refroidisseur à haute température 50.
- La vanne 24 peut être positionnée pour envoyer l'air qui provient de la canalisation 4 dans l'échangeur 2 et empêcher qu'il ne passe dans le conduit intermédiaire 14.
- La vanne 23 peut être fermée en direction de l'échangeur 5 et ouverte, au moins partiellement, en direction de la dérivation 7 pour éviter que des condensats de gaz ne se forment suite à une fuite de la vanne de débit 9.

Si on passe à pleine charge du moteur, comme illustré par l'étape 61, l'eau qui sort du moteur ne passe plus dans la branche 48, ce qui permet de refroidir au maximum le moteur avec le radiateur 50.

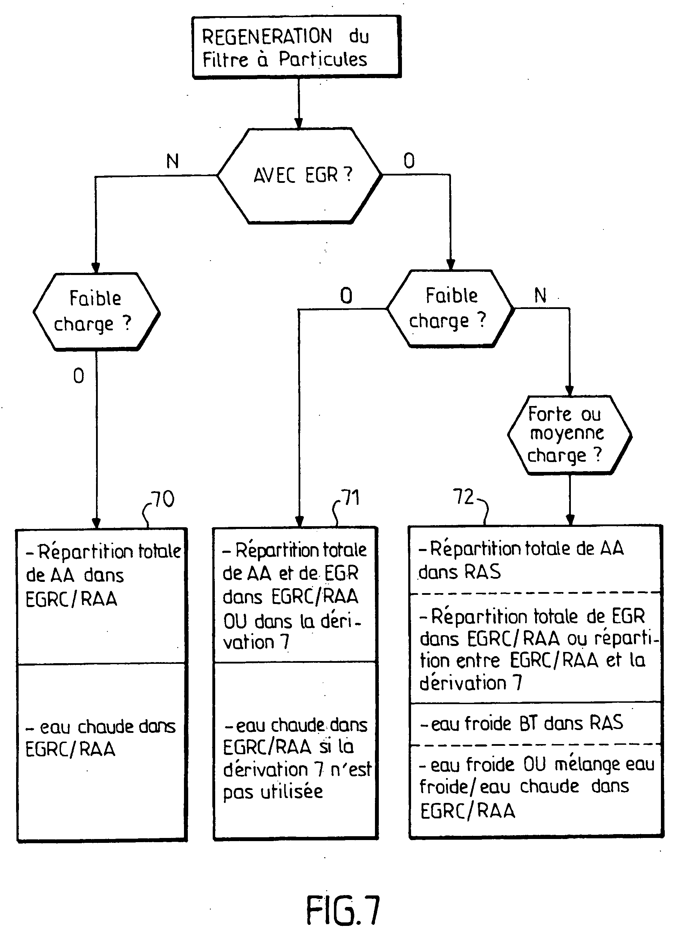

La figure 7 est un organigramme illustrant le fonctionnement du système de régulation en phase de régénération du filtre à particules.

En phase de régénération du filtre à particules, sans injection de gaz d'échappement recirculés, à faible charge, l'air d'admission ne doit pas être refroidi ou doit être réchauffé. Alors, comme illustré par l'étape 70 :
- L'air provenant de la canalisation 4 passe entièrement dans le conduit intermédiaire 14 puis dans l'échangeur 5 qui est en mode réchauffeur d'air d'alimentation. L'échangeur 5 va réchauffer l'air qui le traverse avant de l'envoyer vers le moteur;
- La pompe P2 est alimentée si la température de l'eau dépasse un seuil prédéfini.
- La vanne V2 peut être positionnée de manière à envoyer l'eau qui provient de la branche 63 uniquement, dans la canalisation 70, en direction du moteur, ce qui permet d'envoyer de l'eau chaude dans l'échangeur 5,pour réchauffer l'air qui transite dans l'échangeur 5.
- La vanne V1 peut être positionnée pour empêcher que l'eau qui sort du moteur ne se dirige dans la branche 55 en direction du refroidisseur à haute température 50.
- La vanne 23 est positionnée pour diriger l'air qui arrive du conduit intermédiaire 14 dans l'échangeur 5. La vanne 23 peut également être fermée en direction de la dérivation 7 pour empêcher que les gaz d'échappement recirculés éventuels qui pourraient arriver de la canalisation 3, en cas de blocage de la vanne de débit 9, ne s'y déversent, et provoquent une surchauffe de la dérivation 7.
- La vanne 24 peut être positionnée de manière à diriger l'air provenant de la canalisation 4 dans le conduit intermédiaire 14 et empêcher qu'il ne passe dans l'échangeur 2.

En cas d'accélération importante du véhicule, le mode réchauffage n'est plus nécessaire. La vanne 24 est alors positionnée de manière à diriger l'air, provenant de la canalisation 4, dans l'échangeur 2 pour privilégier les performances du moteur tout en poursuivant la régénération du filtre à particules.

En phase de régénération du filtre à particules, cette fois avec injection de gaz d'échappement recirculés, à faible charge, l'air d'admission ne doit pas être refroidi ou doit être réchauffé et les gaz d'échappement recirculés doivent être refroidis. Alors, comme illustré par l'étape 71 :
- L'air provenant de la canalisation 4 passe entièrement dans le conduit intermédiaire 14 et se mélange aux gaz d'échappement recirculés provenant de la canalisation 3. Le mélange passe entièrement dans l'échangeur 5.
- La pompe P2 est alimentée si la température de l'eau dépasse un seuil prédéfini, sinon elle est arrêtée.
- La vanne V2 peut être positionnée de manière à envoyer l'eau qui provient de la branche 63 uniquement dans la canalisation 70, en direction du moteur, ce qui permet d'envoyer de l'eau chaude dans l'échangeur 5, pour réchauffer le mélange qui traverse l'échangeur 5.
- La vanne V1 est positionnée en fonction de la température moteur, de la charge moteur et de la demande en chauffage.
- La vanne 23 peut être positionnée pour diriger le mélange d'air et de gaz d'échappement soit dans l'échangeur 5 soit dans la dérivation 7 : Si la température du mélange est inférieure à la température de l'eau chaude qui arrive dans l'échangeur 5, le mélange est dirigé vers l'échangeur 5 qui fonctionne en mode réchauffeur. Sinon, le mélange est dirigé vers la dérivation 7.

La vanne 23 est également fermée en direction de la dérivation 7, pour éviter une surchauffe de la dérivation 7, en cas de blocage de la vanne de débit 9 en position ouverte.
- La vanne 24 peut être positionnée de manière à diriger l'air provenant de la canalisation 4 dans le conduit intermédiaire 14 et empêcher qu'il ne passe dans l'échangeur 2.

En cas d'accélération importante du véhicule, le mode réchauffage n'est plus nécessaire. La vanne 24 est alors positionnée de manière à diriger l'air, provenant de la canalisation 4, dans l'échangeur 2 pour privilégier les performances du moteur tout en poursuivant la régénération du filtre à particules et il n'y a plus d'injection de gaz d'échappement recirculés.

En phase de régénération du filtre à particules, avec injection de gaz d'échappement recirculés, mais cette fois à moyenne ou forte charge moteur, l'air d'admission doit être refroidi et les gaz d'échappement recirculés doivent également être refroidis. Alors, comme illustré par l'étape 72 :
- L'air provenant de la canalisation 4 passe entièrement dans l'échangeur 2 pour être refroidi.
- Les gaz d'échappement provenant de la canalisation 3 passe entièrement dans l'échangeur 5 pour être refroidi.
- La pompe P2 est alimentée. L'échangeur 2 reçoit de l'eau froide pour refroidir l'air qui le traverse.
- La vanne V2 peut être positionnée de manière à envoyer l'eau qui provient de la branche 63 uniquement dans la canalisation 68, en direction du refroidisseur à basse température 58, ce qui permet d'envoyer de l'eau froide ou un mélange d'eau chaude et d'eau froide dans l'échangeur 5 pour réduire la température des gaz d'échappement et diminuer les particules d'oxyde d'azote. (Nox) .
- La vanne V1 est positionnée en fonction de la température moteur; de la charge moteur et de la demande en chauffage. Par exemple, elle peut être positionnée de manière à empêcher l'eau qui sort du moteur de passer dans la canalisation 48, si nécessaire. Elle peut aussi être positionnée de manière à empêcher l'eau qui sort du moteur de passer dans la canalisation 55, si nécessaire.
- La vanne 24 peut être positionnée de manière à diriger l'air provenant de la canalisation 4 dans l'échangeur 2 et empêcher qu'il ne passe dans le conduit intermédiaire 14. Elle peut également être positionnée de manière à diriger une partie de l'air provenant de la canalisation 4 dans l'échangeur 2 et l'autre partie dans le conduit intermédiaire 14.
- La vanne 23 peut être positionnée de manière à diriger les gaz d'échappement recirculés provenant de la canalisation 3 dans l'échangeur 5 et empêcher qu'ils ne passent dans la dérivation 7. Elle peut aussi être positionnée de manière à diriger les gaz d'échappement recirculés provenant de la canalisation 3 dans la dérivation 7 et empêcher qu'ils ne passent dans l'échangeur 5. Elle peut enfin être positionnée de manière à diriger les gaz d'échappement recirculés provenant de la canalisation 3 dans la dérivation 7 et dans l'échangeur 5.

La vanne 23 peut en complément être positionnée de manière à diriger, dans l'échangeur 5, les gaz d'échappement recirculés éventuels qui pourraient arriver de la canalisation 3, en cas de blocage de la vanne de débit 9 en position ouverte, ce qui permet d'éviter une surchauffe de la dérivation 7.

Le système de régulation de la température des gaz admis dans le moteur, conforme à l'invention, permet d'utiliser un même échangeur pour le réchauffage de l'air d'alimentation et le refroidissement des gaz d'échappement recirculés.

Il permet en outre d'alimenter le refroidisseur d'air de suralimentation RAS en eau froide 2. Le contrôle des moyens de répartition V1, V2, 23, et 24 permet notamment d'ajuster la température de l'eau qui est délivrée à l'échangeur 5, en fonction des besoins du moteur. L'échangeur 5 peut ainsi être alimenté en eau chaude, en eau froide ou encore par un mélange d'eau chaude et d'eau froide.

Le système de régulation de l'invention a donc l'avantage de fournir une structure d'encombrement réduit et peu coûteuse, tout en assurant une régulation de la température des gaz admis dans le moteur adaptée aux besoins du moteur.

En particulier, le système de régulation de l'invention permet de faire circuler de l'eau chaude dans l'échangeur 5 avant même la circulation effective de gaz dans celui-ci, ce qui réduit le risque de condensation et de corrosion. Par ailleurs, le système de régulation de l'invention permet d'utiliser de l'eau refroidie par le refroidisseur 58 dans l'échangeur 5, en phase de régulation en température, avec injection de gaz d'échappement recirculés, ce qui permet d'abaisser la température des gaz en sortie de l'échangeur 5 sensiblement en dessous de 100°C voir même jusqu'à 20°C (soit 5°C au-dessus de la température ambiante), et de réduire ainsi le taux d'oxyde d'azote Nox, avec le même niveau de particules. Compte tenu de ces températures, l'échangeur 5 pourrait être réalisé en aluminium.

Par ailleurs, le fait d'avoir des températures relativement plus basses dans l'échangeur 5 permet de ralentir la cinétique chimique et par suite le risque de corrosion.

Dans les situations où le risque de condensation (et donc d'encrassement) est élevé, la vanne V2 et la dérivation 7 permettent de maintenir là température des gaz en sortie de l'échangeur 5 autour de 100°C : on peut ainsi envoyer plus d'eau chaude dans l'échangeur 5 pour éviter la formation de condensats.

Conformément à l'invention, les gaz d'échappement recirculés peuvent être mélangés avec l'air d'admission avant de passer dans l'échangeur 5, en phase de régénération à charge moyenne avec injection de gaz d'échappement recirculés, ce qui permet de diminuer le taux d'oxyde d'azote (Nox) et de diminuer la température du mélange avant son entrée dans l'échangeur 5.

Bien évidemment, l'invention n'est pas limitée aux modes de réalisation décrits ci-dessus. Elle englobe toutes les variantes de réalisation qui pourront être envisagées par l'homme du métier.

## Revendications

1. Système d'échange de chaleur pour la régulation thermique des gaz admis dans un moteur de véhicule automobile, comportant deux branches d'échange de chaleur, la première branche comportant un premier échangeur (2) conformé pour fonctionner en mode refroidisseur, et des premiers moyens de répartition (24), reliés en entrée à une arrivée d'air d'admission (4) et en sortie au premier échangeur (2),
la deuxième branche comportant un deuxième échangeur de chaleur (5) conformé pour fonctionner en mode refroidisseur et des deuxièmes moyens de répartition (23), reliés en entrée à l'arrivée de gaz d'échappement recirculés (3) et en sortie au deuxième échangeur (5), les premiers moyens de répartition étant aptes à ajuster la proportion d'air d'admission à refroidir dans le premier échangeur (2) et les deuxièmes moyens de répartition étant aptes à ajuster la proportion de gaz d'échappement recirculés à refroidir dans le deuxième échangeur (5),
**caractérisé en ce que** le deuxième échangeur (5) est en outre conformé pour fonctionner en mode réchauffeur et **en ce que** les deuxièmes moyens de répartition (23) sont en outre reliés à l'arrivée d'air d'admission (4) par un conduit intermédiaire (14), les deuxièmes moyens de répartition étant aptes à ajuster la proportion d'air d'admission à réchauffer dans le deuxième échangeur (5).

2. Système d'échange de chaleur selon la revendication 1, **caractérisé en ce que** les premiers moyens de répartition (24) sont en outre reliés en sortie aux deuxièmes moyens de répartition par le conduit intermédiaire (14), les premiers moyens de répartition (24) étant aptes à ajuster la proportion d'air d'admission à répartir dans le conduit intermédiaire (14).

3. Système d'échange de chaleur selon l'une des revendications 1 et 2, **caractérisé en ce qu'**il comporte des moyens de commande propres à commander l'un au moins des moyens de répartition parmi les premiers et les deuxièmes moyens de répartition (24,23).

4. Système d'échange de chaleur selon l'une des revendications 1 à 3, **caractérisé en ce que** le premier échangeur (2) est relié à une entrée de fluide froid (64) propre à délivrer un fluide froid pour l'échange de chaleur avec l'air d'admission qui traverse le premier échangeur (2).

5. Système d'échange de chaleur selon l'une des revendications 1 à 4, **caractérisé en ce que** le deuxième échangeur (5) est raccordé à une entrée de fluide régulé (63) propre à délivrer un fluide dont la température est régulée pour l'échange de chaleur avec les gaz qui traversent le deuxième échangeur (5).

6. Système d'échange de chaleur selon la revendication 5 prise en combinaison avec la revendication 3, **caractérisé en ce que** l'entrée de fluide régulé du deuxième échangeur (63) est reliée à une arrivée de fluide chaud (62) et à une arrivée de fluide froid (61), et **en ce que** le système comprend en outre des moyens de répartition auxiliaires (V2) commandés par les moyens de commande, les moyens de commande étant propres à ajuster la proportion de fluide chaud (62) et la proportion de fluide froid (61) à envoyer dans l'entrée de fluide du deuxième échangeur (63).

7. Système d'échange de chaleur selon la revendication 6, **caractérisé en ce que** la température du fluide délivré par l'arrivée de fluide chaud (62) est sensiblement comprise entre 85°C et 118°C.

8. Système d'échange de chaleur selon l'une des revendications 6 et 7, **caractérisé en ce que** les moyens de répartition auxiliaires (V2) sont directement raccordés à l'arrivée de fluide chaud (62), à l'arrivée de fluide froid (61) et à l'entrée de fluide du deuxième échangeur (63).

9. Système d'échange de chaleur selon l'une des revendications 6 à 8, **caractérisé en ce que** les moyens de répartition auxiliaires (V2) comprennent un capteur de température.

10. Système d'échange de chaleur selon l'une des revendications 6 à 9, **caractérisé en ce que** les moyens de répartition auxiliaires (V2) sont agencés pour délivrer un fluide chaud dans l'entrée de fluide du deuxième échangeur (63), lorsque le deuxième.échangeur n'est pas traversé par des gaz, dans la phase de montée en température du moteur.

11. Système d'échange de chaleur selon la revendication 10, **caractérisé en ce que** la température du fluide chaud dans l'entrée de fluide du premier échangeur (63) est au moins égale à 60°C.

12. Système d'échange de chaleur selon l'une des revendications précédentes, **caractérisé en ce que** les premiers moyens de répartition (24) sont reliés en sortie à une première dérivation (8) de contournement du premier échangeur (2), les premiers moyens de répartition étant aptes à ajuster la proportion d'air d'admission à répartir dans la première dérivation (8), ce qui permet d'ajuster la proportion d'air d'admission à ne pas refroidir ni réchauffer, et **en ce que** les deuxièmes moyens de répartition (23) sont reliés en sortie à une deuxième dérivation (7') de contournement du deuxième échangeur (5), les deuxièmes moyens de répartition (23) étant aptes à ajuster la proportion de gaz d'échappement recirculés à répartir dans la deuxième dérivation (7'), ce qui permet d'ajuster la proportion de gaz d'échappement recirculés à ne pas refroidir.

13. Système d'échange de chaleur selon l'une des revendications 1 à 11, **caractérisé en ce que** les deuxièmes moyens de répartition (23) sont en outre reliés en sortie à une dérivation commune (7) de contournement du premier échangeur (2) et du deuxième échangeur (5), les premiers moyens de répartition étant aptes à collaborer avec les deuxièmes moyens de répartition pour ajuster la proportion d'air d'admission à répartir dans la dérivation commune (7), ce qui permet d'ajuster la proportion d'air d'admission à ne pas refroidir ni réchauffer, et les deuxièmes moyens de répartition étant aptes à ajuster la proportion de gaz d'échappement recirculés à répartir dans la dérivation commune (7), ce qui permet d'ajuster la proportion de gaz d'échappement recirculés à ne pas refroidir.

14. Système d'échange de chaleur selon l'une des revendications précédentes, **caractérisé en ce que** le premier échangeur (2) et le deuxième échangeur (5) comportent un collecteur de sortie commun (31).

15. Système d'échange de chaleur selon la revendication 14 prise en combinaison avec l'une des revendications 12 et 13, **caractérisé en ce que** les dérivations (7',7, 8) débouchent dans le collecteur commun (31).

16. Système d'échange de chaleur selon l'une des revendications précédentes, **caractérisé en ce que** les premiers moyens de répartition (24) et les deuxièmes moyens de répartition (23) comprennent une vanne proportionnelle respective.

17. Système d'échange de chaleur selon l'une des revendications précédentes, **caractérisé en ce qu'**il comporte une vanne de débit (9) agencée sur l'arrivée de gaz d'échappement recirculés, en amont des deuxièmes moyens de répartition (23), pour régler le débit des gaz recirculés.

18. Système d'échange de chaleur selon l'une des revendications précédentes, **caractérisé en ce que** le deuxième échangeur de chaleur (5) est réalisé en aluminium.

## Claims

1. Heat exchange system for regulating the temperature of the gases admitted into the engine of a motor vehicle, comprising two heat exchange branches, the first branch comprising a first exchanger (2) configured to function in cooling mode and first means of distribution (24) connected at the point of entry to an intake for inlet air (4) and at the point of exit to the first exchanger (2),
the second branch comprising a second heat exchanger (5) configured to function in cooling mode and second means of distribution (23) connected at the point of entry to the intake for recirculated exhaust gases (3) and at the point of exit to the second exchanger (5), the first means of distribution being able to adjust the proportion of inlet air to be cooled in the first exchanger (2), and the second means of distribution being able to adjust the proportion of recirculated exhaust gases to be cooled in the second exchanger (5), **characterized in that** the second exchanger (5) is additionally configured to function in reheating mode, and **in that** the second means of distribution (23) are additionally connected to the intake for inlet air (4) by an intermediate pipe (14), the second means of distribution being able to adjust the proportion of inlet air to be reheated in the second exchanger (5).

2. Heat exchange system according to Claim 1, **characterized in that** the first means of distribution (24) are additionally connected at the point of exit to the second means of distribution by the intermediate pipe (14), the first means of distribution (24) being able to adjust the proportion of inlet air to be distributed in the intermediate pipe (14).

3. Heat exchange system according to one of Claims 1 and 2, **characterized in that** it comprises control means suitable for controlling one at least of the means of distribution from among the first and the second means of distribution (24, 23).

4. Heat exchange system according to one of Claims 1 to 3, **characterized in that** the first exchanger (2) is connected to an inlet for cold fluid (64) suitable for supplying a cold fluid for the exchange of heat with the inlet air which passes through the first exchanger (2).

5. Heat exchange system according to one of Claims 1 to 4, **characterized in that** the second exchanger (5) is connected to an inlet for regulated fluid (63) suitable for supplying a fluid, the temperature of which is regulated for the exchange of heat with the gases which pass through the second exchanger (5).

6. Heat exchange system according to Claim 5, in conjunction with Claim 3, **characterized in that** the inlet for regulated fluid from the second exchanger (63) is connected to an intake for hot fluid (62) and to an intake for cold fluid (61), and **in that** the system additionally comprises auxiliary means of distribution (V2) controlled by the control means, the control means being suitable for adjusting the proportion of hot fluid (62) and the proportion of cold fluid (61) to be supplied into the fluid inlet of the second exchanger (63).

7. Heat exchange system according to Claim 6, **characterized in that** the temperature of the fluid supplied through the intake for hot fluid (62) is substantially between 85 °C and 118°C.

8. Heat exchange system according to one of Claims 6 and 7, **characterized in that** the auxiliary means of distribution (V2) are connected directly to the intake for hot fluid (62), to the intake for cold fluid (61) and to the fluid inlet of the second exchanger (63).

9. Heat exchange system according to one of Claims 6 to 8, **characterized in that** the auxiliary means of distribution (V2) comprise a temperature sensor.

10. Heat exchange system according to one of Claims 6 to 9, **characterized in that** the auxiliary means of distribution (V2) are arranged to deliver a hot fluid into the fluid inlet of the second exchanger (63), when the second exchanger is not being traversed by gases, during the phase in which the temperature of the engine is increasing.

11. Heat exchange system according to Claim 10, **characterized in that** the temperature of the hot fluid in the fluid inlet of the first exchanger (63) is at least equal to 60 °C.

12. Heat exchange system according to one of the preceding claims, **characterized in that** the first means of distribution (24) are connected at the point of exit to a first by-pass derivation (8) of the first exchanger (2), the first means of distribution being able to adjust the proportion of inlet air to be distributed in the first derivation (8), which permits the adjustment of the proportion of inlet air that is to be neither cooled nor reheated, and **in that** the second means of distribution (23) are connected at the point of exit to a second by-pass derivation (7') of the second exchanger (5), the second means of distribution (23) being able to adjust the proportion of recirculated exhaust gases to be distributed in the second derivation (7'), which permits the adjustment of the proportion of recirculated exhaust gases that are not to be cooled.

13. Heat exchange system according to one of Claims 1 to 11, **characterized in that** the second means of distribution (23) are additionally connected at the point of exit to a common by-pass derivation (7) for the first exchanger (2) and for the second exchanger (5), the first means of distribution being able to interact with the second means of distribution for the purpose of adjusting the proportion of inlet air to be distributed in the common derivation (7), which permits the adjustment of the proportion of inlet air that is to be neither cooled nor reheated, and the second means of distribution being able to adjust the proportion of recirculated exhaust gases to be distributed in the common derivation (7), which permits the adjustment of the proportion of recirculated exhaust gases that are not to be cooled.

14. Heat exchange system according to one of the preceding claims, **characterized in that** the first exchanger (2) and the second exchanger (5) comprise a common outlet collector (31).

15. Heat exchange system according to Claim 14, in conjunction with one of Claims 12 and 13, **characterized in that** the derivations (7', 7, 8) discharge into the common collector (31).

16. Heat exchange system according to one of the preceding claims, **characterized in that** the first means of distribution (24) and the second means of distribution (23) respectively comprise a proportional valve.

17. Heat exchange system according to one of the preceding claims, **characterized in that** it comprises a flow valve (9) arranged on the intake for recirculated exhaust gases, upstream of the second means of distribution (23), for the purpose of regulating the flow of the recirculated gases.

18. Heat exchange system according to one of the preceding claims, **characterized in that** the second heat exchanger (5) is made of aluminium.

## Patentansprüche

1. Wärmeaustauschsystem zum Wärmeregeln der Gase, die in einen Kraftfahrzeugmotor eingelassen werden, das zwei Wärmeaustauschzweige aufweist, wobei der erste Zweig einen ersten Austauscher (2) aufweist, der ausgebildet ist, um im Kühlmodus zu funktionieren, und erste Verteilungsmittel (24), die am Eingang mit einer Einlassluftzuleitung (4) und am Ausgang mit dem ersten Austauscher (2) verbunden sind,
wobei der zweite Zweig einen zweiten Wärmeaustauscher (5) aufweist, der ausgebildet ist, um im Kühlmodus zu funktionieren, und zweite Verteilungsmittel (23), die am Eingang mit der Zuleitung der rezirkulierten Abgase (3) und am Ausgang mit dem zweiten Wärmeaustauscher (5) verbunden sind, wobei die ersten Verteilungsmittel den Einlassluftanteil anpassen können, der in dem ersten Wärmeaustauscher (2) zu kühlen ist, und die zweiten Verteilungsmittel den Anteil an rezirkulierten Gasen anpassen können, der in dem zweiten Wärmeaustauscher (5) zu kühlen ist,
**dadurch gekennzeichnet, dass** der zweite Wärmeaustauscher (5) ferner ausgebildet ist, um im Erhitzermodus zu funktionieren, und dass die zweiten Verteilungsmittel (23) ferner mit der Einlassluftzuleitung (4) durch eine Zwischenleitung (14) verbunden sind, wobei die zweiten Verteilungsmittel den Einlassluftanteil anpassen können, der in dem zweiten Wärmeaustauscher (5) zu erhitzen ist.

2. Wärmeaustauschsystem nach Anspruch 1, **dadurch gekennzeichnet, dass** die ersten Verteilungsmittel (24) ferner am Ausgang mit den zweiten Verteilungsmitteln durch die Zwischenleitung (14) verbunden sind, wobei die ersten Verteilungsmittel (24) den Einlassluftanteil anpassen können, der in der Zwischenleitung (14) zu verteilen ist.

3. Wärmeaustauschsystem nach einem der Ansprüche 1 und 2, **dadurch gekennzeichnet, dass** es Steuermittel aufweist, die mindestens das erste oder das zweite der Verteilungsmittel (24, 23) steuern können.

4. Wärmeaustauschsystem nach einem der Ansprüche 1 bis 3, **dadurch gekennzeichnet, dass** der erste Wärmeaustauscher (2) mit einem Eingang für kalte Flüssigkeit (64) verbunden ist, der eine kalte Flüssigkeit für den Wärmeaustausch mit der Einlassluft, die den ersten Austauscher (2) durchquert, liefern kann.

5. Wärmeaustauschsystem nach einem der Ansprüche 1 bis 4, **dadurch gekennzeichnet, dass** der zweite Wärmeaustauscher (5) an einen geregelten Flüssigkeitseingang (63) angeschlossen ist, der eine Flüssigkeit liefern kann, deren Temperatur für den Wärmeaustausch mit den Gasen, die den zweiten Austauscher (5) durchqueren, geregelt ist.

6. Wärmeaustauschsystem nach Anspruch 5 in Kombination mit Anspruch 3, **dadurch gekennzeichnet, dass** der geregelte Flüssigkeitseingang des zweiten Austauschers (63) mit einer Zuleitung warmer Flüssigkeit (62) und einer Zuleitung kalter Flüssigkeit (61) verbunden ist, und dass das System ferner Hilfsverteilungsmittel (V2) aufweist, die von den Steuermitteln gesteuert werden, wobei die Steuermittel den Anteil an warmer Flüssigkeit (62) und den Anteil an kalter Flüssigkeit (61), die in den Flüssigkeitseingang des zweiten Austauschers (63) zu senden ist, steuern können.

7. Wärmeaustauschsystem nach Anspruch 6, **dadurch gekennzeichnet, dass** die Temperatur der von der Zuleitung warmer Flüssigkeit (62) gelieferten Flüssigkeit im Wesentlichen zwischen 85 °C und 118 °C liegt.

8. Wärmeaustauschsystem nach einem der Ansprüche 6 und 7, **dadurch gekennzeichnet, dass** die Hilfsverteilungsmittel (V2) direkt an die Zuleitung warmer Flüssigkeit (62), an die Zuleitung kalter Flüssigkeit (61) und an den Flüssigkeitseingang des zweiten Wärmeaustauschers (63) angeschlossen sind.

9. Wärmeaustauschsystem nach einem der Ansprüche 6 bis 8, **dadurch gekennzeichnet, dass** die Hilfsverteilungsmittel (V2) einen Wärmesensor aufweisen.

10. Wärmeaustauschsystem nach einem der Ansprüche 6 bis 9, **dadurch gekennzeichnet, dass** die Hilfsverteilungsmittel (V2) eingerichtet sind, um eine warme Flüssigkeit in den Flüssigkeitseingang des zweiten Wärmeaustauschers (63) zu liefern, wenn der zweite Wärmeaustauscher während der Temperaturanstiegsphase des Motors nicht von Gasen durchquert wird.

11. Wärmeaustauschsystem nach Anspruch 10, **dadurch gekennzeichnet, dass** die Temperatur der warmen Flüssigkeit in dem Flüssigkeitseingang des ersten Austauschers (63) mindestens 60 °C beträgt.

12. Wärmeaustauschsystem nach einem der vorhergehenden Ansprüche, **dadurch gekennzeichnet, dass** die ersten Verteilungsmittel (24) am Ausgang mit einer ersten Umleitungsabzweigung (8) des ersten Austauschers (2) verbunden sind, wobei die ersten Verteilungsmittel den Einlassluftanteil, der in der ersten Abzweigung (8) zu verteilen ist, anpassen können, was es erlaubt, den Einlassluftanteil, der weder abzukühlen noch zu erhitzen ist, anzupassen, und dass die zweiten Verteilungsmittel (23) am Ausgang mit einer zweiten Umleitungsabzweigung (7') des zweiten Austauschers (5) verbunden sind, wobei die zweiten Verteilungsmittel (23) den Anteil an rezirkulierten Abgasen, der in der zweiten Abzweigung (7') zu verteilen ist, anpassen können, was es erlaubt, den Anteil an rezirkulierten Abgasen, der nicht abzukühlen ist, anzupassen.

13. Wärmeaustauschsystem nach einem der Ansprüche 1 bis 11, **dadurch gekennzeichnet, dass** die zweiten Verteilungsmittel (23) ferner am Ausgang mit einer gemeinsamen Umleitungsabzweigung (7) des ersten Austauschers (2) und des zweiten Austauschers (5) verbunden sind, wobei die ersten Verteilungsmittel mit den zweiten Verteilungsmitteln zusammenwirken können, um den Einlassluftanteil, der in der gemeinsamen Abzweigung (7) zu verteilen ist, anzupassen, was es erlaubt, den Einlassluftanteil, der weder abzukühlen noch zu erhitzen ist, anzupassen, und wobei die zweiten Verteilungsmittel den Anteil an rezirkulierten Abgasen, der in der gemeinsamen Abzweigung (7) zu verteilen ist, anpassen können, was es erlaubt, den Anteil an rezirkulierten Abgasen, die nicht abzukühlen sind, anzupassen.

14. Wärmeaustauschsystem nach einem der vorhergehenden Ansprüche, **dadurch gekennzeichnet, dass** der erste Austauscher (2) und der zweite Austauscher (5) einen gemeinsamen Ausgangsammler (31) aufweisen.

15. Wärmeaustauschsystem nach Anspruch 14, in Kombination mit einem der Ansprüche 12 und 13, **dadurch gekennzeichnet, dass** die Abzweigungen (7', 7, 8) in den gemeinsamen Sammler (31) münden.

16. Wärmeaustauschsystem nach einem der vorhergehenden Ansprüche, **dadurch gekennzeichnet, dass** die ersten Verteilungsmittel (24) und die zweiten Verteilungsmittel (23) jeweils ein Proportionalventil aufweisen.

17. Wärmeaustauschsystem nach einem der vorhergehenden Ansprüche, **dadurch gekennzeichnet, dass** es ein Durchflussventil (9) aufweist, das auf der Zuleitung der rezirkulierten Abgase stromaufwärts der zweiten Verteilungsmittel (23) eingerichtet ist, um den Durchfluss der rezirkulierten Abgase zu regeln.

18. Wärmeaustauschsystem nach einem der vorhergehenden Ansprüche, **dadurch gekennzeichnet, dass** der zweite Wärmeaustauscher (5) aus Aluminium hergestellt ist.
